# EUROPEAN PATENT SPECIFICATION

(11) **EP 2 489 694 B1**
(45) Date of publication and mention of the grant of the patent: **07.05.2014**
(21) Application number: 11194050.8
(22) Date of filing: 16.12.2011
(51) Int. Cl.: C08J 7/12

(54) **Method and Device for Functionalizing an Inner Surface of a Container**
Verfahren und Vorrichtung zur Funktionalisierung einer inneren Oberfläche eines Behälters
Procédé et dispositif de fonctionnalisation d'une surface interne de récipient

(30) Priority: 15.02.2011 DE 102011011287
(43) Date of publication of application: 22.08.2012
(73) Proprietor: L'Air Liquide Société Anonyme pour l'Etude et l'Exploitation des Procédés Georges Claude, 75007 Paris (FR); Air Liquide Deutschland GmbH, 40235 Düsseldorf (DE)
(72) Inventor: Van Bonn, Rolf, 47269 DUISBURG (DE)
(74) Representative: Mellul-Bendelac, Sylvie Lisette

(56) References cited:
- DE-A1- 3 535 602
- US-A1- 2006 122 560

## Description

The present invention relates to a method and a device for functionalizing an inner surface of a container. The invention is preferably used for the fluorination of containers with large volumes, in particular with volumes of from 1 m³ [cubic metre] to 60 m³ or more.

The functionalization of surfaces, that is to say the at least partial replacement of hydrogen atoms in plastic surfaces by other atoms, for example fluorine or chlorine, in particular, is used in order to modify the properties of plastic surfaces. This involves in particular the modification of properties such as for example static and/or sliding friction, the permeation coefficients, etc. For instance, the functionalization of fuel tanks in order to reduce the fuel loss by permeation is known from EP 0 566 883 B1.

Basically, for the fluorination of surfaces of plastic containers, distinction may be made between in-line fluorination and off-line fluorination. With in-line fluorination, the plastic is already functionalized during the production of hollow bodies. In-line fluorination is associated in particular with the production process of blow extrusion, which is used in the production of tanks for cars, for example. Such in-line fluorination is known, for example, from EP 0 210 344 A2. Containers with large volumes, for example storage containers for acids or alkalis, are predominantly produced by the winding technique and cannot therefore be in-line fluorinated.

DE 35 35 602 A1 discloses a method to fabricate blow moulded hollow articles with fluorinated internal surface.

Off-line fluorination of an inner surface of a container takes place in principle after the production process, a gas mixture containing fluorine being fed into the container. Off-line fluorination is uneconomical particularly for containers with large volumes. Thus, the entire volume of the container is flooded with a gas containing fluorine. For the actual fluorination of the inner surface of the container, however, only a fraction of the amount of fluorine fed in is necessary. This is due to the unfavourable ratio of the container surface area to the container volume.

It is therefore an object of the present invention to at least partially resolve the problems known from the prior art. In particular a method and a device are to be provided, by which the amount of fluorine used for the functionalization of plastic-surface containers is reduced and by which the functionalization is made more efficient.

These objects are achieved by the method and the device according to the independent claims. The respective dependent claims relate to corresponding refinements. The features referred to individually in the patent claims may be combined with one another in any desired technologically feasible way and may be supplemented with explanatory information from the description, in which further alternative embodiments of the invention are presented.

In particular, the objects are achieved by a method for functionalizing, in particular fluorinating, an inner surface of a container, in particular a plastic container, comprising at least the following steps:
- introducing a gastight body into the container, so that an intermediate space is formed between the inner surface and the gastight body,
- feeding a treatment gas into the intermediate space.

The containers to be functionalized by the method according to the invention are, in particular, plastic containers which have a volume of from 1 m³ to 60 m³, preferably even up to 120 m³ or more. These containers are used in particular as storage containers for acids or alkalis.

Gastight bodies are intended in particular to mean bodies, containers, structures or other objects whose surface is impermeable to the treatment gas in particular. The gastight body may, however, also consist of a plurality of components which are connected gastightly to one another. For the gastight body, it is thus essential that the treatment gas cannot enter the body or emerge from it. It is, however, clear that the surface of the gastight body is or can also be functionalized by the treatment gas at least when first used in the method according to the invention.

The gastight body is, in particular, introduced into the container through an opening in the container, and then the opening is closed. According to the invention, the gastight body is placed with respect to the container to be functionalized so that there is an intermediate space between the inner surface and at least a part of the surface of the gastight body. The volume of the intermediate space is therefore substantially less than the inner volume of the container. The intermediate space is preferably a continuous space, in which support elements for spacing the gastight body from the inner surface may preferably be arranged. These support elements may be fastened to the inner surface before introducing the gastight body, although they may also be arranged, and in particular formed, on the gastight body.

The treatment gas is a gas or gas mixture, which contains at least one reactive gas that functionalizes the inner surface of the container.

By the method according to the invention, the volume into which the treatment gas is fed is reduced so that the amount of treatment gas required, and therefore the amount of reactive gas required, is reduced. Furthermore, formation of the intermediate space allows direct supply of the treatment gas to the inner surface of the container. The consumption of treatment gas is therefore reduced and a more efficient method for functionalizing plastic container inner surfaces is provided.

Preferably, the treatment gas comprises at least fluorine or chlorine as a reactive gas. Particularly preferably, the proportion of fluorine in the treatment gas is between 1 vol% and 30 vol%, more particularly preferably between 5 vol% and 15 vol%.

According to an advantageous refinement of the invention, before feeding the treatment gas in, the size of the gastight body is modified so that the intermediate space has a predetermined volume. The size of the gastight body is intended in particular to mean the outer dimension of the gastight body. Preferably, the outer dimension is increased after introducing the gastight body into the container so that the volume of the intermediate space is reduced after introduction. The size of the gastight body is particularly preferably modified so that the volume of the intermediate space is at most 10%, more particularly preferably at most 5% of the inner volume of the container. It is therefore possible to introduce a body which is relatively small in the original state through a relatively small opening of the container into the container, and subsequently reduce the initially relatively large volume of the intermediate space.

A simple measure for modifying the size of the gastight body is to supply a pressurized gas into the gastight body. Compressed air is preferably used as a pressurized gas. The pressurized gas is thus fed into the gastight body, the size of the gastight body being modified as a result of an elastic surface or a mechanical configuration of the body wall and the increase in the pressure.

It is particularly advantageous for the intermediate space to be flushed with a flushing gas. Flushing is, for example, intended to mean a continuous flushing process in which the flushing gas flows through the intermediate space for a flushing time, or a discontinuous flushing process in which flushing gas is introduced into the intermediate space, left therein during the flushing time, and then removed therefrom. The flushing gas should, in particular, be free of reactive substances and is formed in particular by an inert gas, for example nitrogen or air, in which the concentration of the reactive substances is less than 0.2 vol%, preferably less than 0.01 vol% and particularly preferably less than 0.01 vol%. The flushing of the intermediate space takes place before and/or after the treatment gas is fed in. Flushing before feeding the treatment gas in frees the intermediate space from undesired contaminants, and flushing after feeding the treatment gas in removes reactive substances from the intermediate space so that the reactive substances cannot enter the environment.

Preferably, a gas from the group consisting of treatment gas and flushing gas is fed through the gastight body into the intermediate space. For example, a gas is fed from outside the container into a distribution system inside the gastight body and from there into the intermediate space. In this way, the treatment gas is fed directly to many positions of the intermediate space, so that there are the same gas conditions, in particular equal concentrations of reactive gas, at all positions of the intermediate space and therefore on the inner surface of the container. A particularly uniformly functionalized inner surface of the container is therefore achieved.

Another aspect of the invention provides a device for functionalizing an inner surface of a container. The device comprises a closure apparatus for the container, a gastight body to be introduced into the container and a feed apparatus for feeding a gas into the container. The device according to the invention is used in particular to carry out the method according to the invention.

The closure apparatus is used to close the opening of the container, through which the gastight body is introduced into the container. The closure apparatus is preferably formed by a flange cover. The feed apparatus is formed in particular so that the treatment gas can be fed into the intermediate space between the gastight body and the inner surface of the container. With the device according to the invention, it is therefore possible to reduce the volume into which a treatment gas is introduced, to such an extent that a considerable amount of treatment gas can be saved. The gastight body is thus introduced into the container through an opening of the container, then the opening is closed by the closure apparatus and subsequently the intermediate space formed between the gastight body and the inner surface of the container is flooded with gas.

According to a preferred embodiment, the gastight body is applied, and can be introduced into the container, on the closure apparatus. The gastight body is in particular applied gastightly on the closure apparatus, so that no treatment gas can enter the gastight body through the connection position between the closure apparatus and the gastight body. This makes it possible for the gastight body to be introduced into the container and for the closure apparatus to be positioned on the opening in a single step.

According to another preferred embodiment of the device according to the invention, the gastight body is an element from the following group:
- a rigid structure,
- a bellows,
- an elastic balloon.

The rigid structure preferably has the same shape as the inner surface of the container, with only slightly smaller dimensions than the inner surface of the container, and can therefore be used for a multiplicity of identical containers. The rigid structure is particularly preferably formed as a hollow structure.

The elastic balloon can be adapted particularly easily to the shape of the inner surface of the container by supplying it with a pressurized gas. The elastic balloon preferably has reinforcing ribs, which ensure spacing of the shell of the balloon from the inner surface so that the intermediate space is formed and the elastic balloon does not fully bear on the inner surface of the container. The balloon is therefore preferably introduced for functionalizing containers of different shapes. The bellows also allows subsequent modification of its size, so that the intermediate space can adopt a predetermined volume. The bellows is preferably used for containers with the same cross section but different heights, or at positions where there is not enough space to introduce the rigid structure into containers.

According to an expedient embodiment, the feed apparatus comprises lines for passing a gas through the closure apparatus and through the gastight body. This makes it possible to feed a gas from outside the container to a plurality of positions of the intermediate space through the closure apparatus and the gastight body, so that gas distribution in the intermediate space with consistent properties is possible, in particular a uniform reactive gas concentration in the intermediate space. In the assembled state, the lines thus lead from outside the container or the closure apparatus through the gastight body into the intermediate space.

According to another expedient embodiment of the device according to the invention, a supply apparatus for supplying pressurized gas into the gastight body is applied on the closure apparatus. The supply apparatus is formed for example by a valve and a line leading through the closure apparatus, so that compressed air can be introduced into the gastight body. The size of the gastight body can therefore be modified, after the gastight body has been introduced into the container, by supplying a pressurized gas into the gastight body.

The details and advantages disclosed for the method according to the invention can also be adapted and applied to the device according to the invention, and vice versa.

The invention and the technical context will be explained below by way of example with the aid of the figures. It should be pointed out that the figures show particularly preferred exemplary embodiments, but the invention is not limited thereto. Schematically:
- Fig. 1:: shows a first embodiment of the device according to the invention,
- Fig. 2:: shows a second embodiment of the device according to the invention,
- Fig. 3:: shows a third embodiment of the device according to the invention,
- Fig. 4:: shows a fourth embodiment of the device according to the invention, and
- Fig. 5:: shows a fifth embodiment of the device according to the invention.

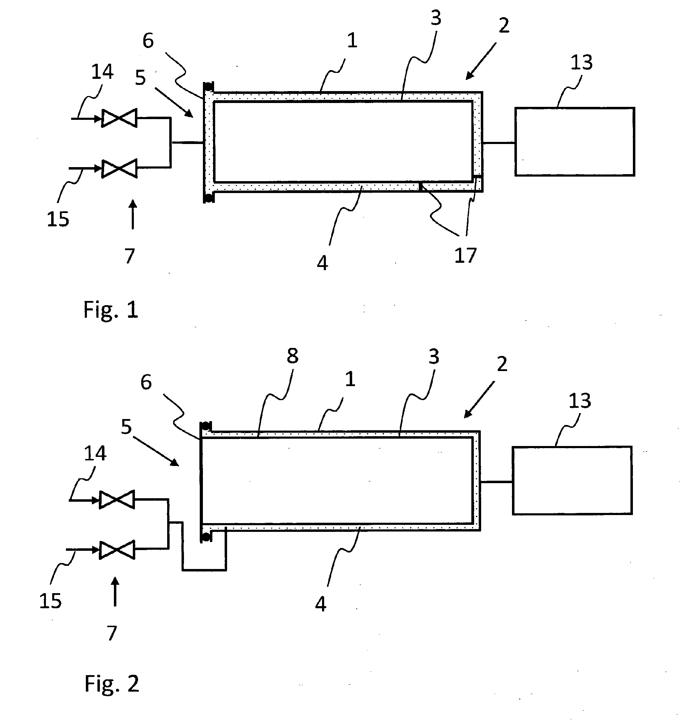

Fig. 1 schematically shows a first embodiment of the device 5 according to the invention for functionalizing an inner surface 1 of a container 2. The device 5 comprises a gastight body 3, which can be arranged with the aid of spacers 17 in the container 2 so that an intermediate space 4 is formed. The device 5 furthermore comprises a closure apparatus 6 for closing the container 2 when the gastight body 3 is arranged in the container 2. Connected to the closure apparatus 6 there is a feed apparatus 7 which comprises a treatment gas inlet 14 and a flushing gas inlet 15. A treatment gas and/or flushing gas can be fed into the intermediate space 4 by the feed apparatus 7. An extraction apparatus 13 is furthermore provided, which can discharge the gas contained in the intermediate space 4.

In order to carry out the method according to the invention, with the closure apparatus 6 open the gastight body 3 is first arranged in the container 2 so that the intermediate space 4 is formed. Subsequently, the container 2 is closed by the closure apparatus 6. In order to flush the intermediate space 4, a flushing gas is fed through the flushing gas inlet 15 into the intermediate space 4 and sucked out by the extraction apparatus 13. The extraction apparatus 13 may also generate and/or maintain a reduced pressure in the intermediate space 4. Subsequently, a treatment gas comprising fluorine is fed through the treatment gas inlet 14 of the feed apparatus 7 into the intermediate space 4. The treatment gas may flow continuously through the intermediate space 4. It is likewise possible according to the invention to keep the treatment gas in the intermediate space 4 for a certain time and then remove it by the extraction apparatus 13. After the treatment with the treatment gas, the intermediate space 4 may be flushed again with a flushing gas. Owing to the relatively small ratio of the volume of the intermediate space 4 to the inner volume of the container 2, the amount of treatment gas required for functionalizing the inner surface 1 of the container 2 is reduced greatly.

The exemplary embodiments of the device according to the invention in Figs 2 to 5 will be described primarily in relation to their differences from the embodiment in Fig. 1. Elements which are the same are described by the same references.

Fig. 2 represents a second embodiment of a device 5 according to the invention. The gastight body 3 is in this case firmly connected to the closure apparatus 6 and formed by a rigid structure 8. The rigid structure 8 can therefore be used for a multiplicity of identical containers 2. The rigid structure 8 is preferably configured as a hollow structure. In this embodiment, the gas is introduced into the intermediate space not through the closure apparatus 6 but through a side wall of the container 2.

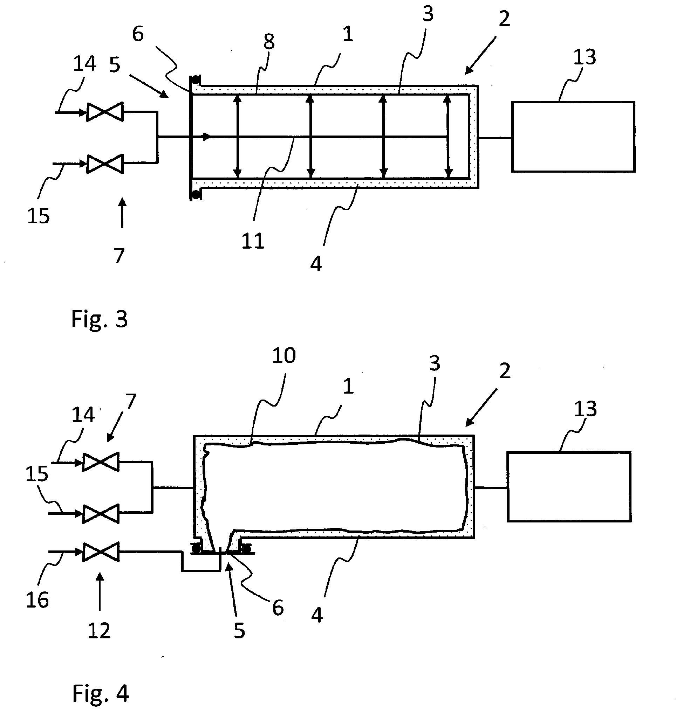

Fig. 3 represents a third embodiment of a device 5 according to the invention. In this embodiment, as in Fig. 2, the gastight body 3 is formed by a rigid hollow structure 8, lines 11 through which a flushing gas and/or treatment gas can flow from the feed apparatus 7 being formed in the structure 8, so that the flushing gas and/or treatment gas is fed to different positions of the intermediate space 4.

Fig. 4 shows a fourth embodiment of a device 5 according to the invention. Unlike in the previous embodiments, the container 2 has only a small opening. A gastight body 3, which is formed by a balloon 10, is introduced into the container 2 through this opening. The balloon 10 can be filled with a pressurized gas from a supply apparatus 12 using a pressurized gas line 16. By feeding compressed air in or extracting the air, the size of the balloon 10 can be modified so that the volume of the intermediate space 4 is influenced. The balloon 10 can thus be introduced into the container 2 in a folded state and subsequently have its volume increased by supplying compressed air.

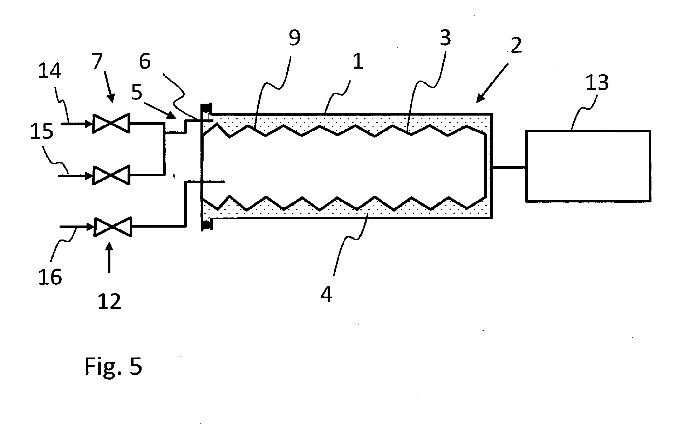

Fig. 5 shows a fifth embodiment of the device 5 according to the invention. The gastight body 3 is formed here by a bellows 9, which is fastened to the closure apparatus 6. The bellows 9 can be filled with pressurized gas from a supply apparatus 12, and thus have its size modified. The apparatus 5 can therefore be adapted to different sizes of the containers 2.

With the device 5 according to the invention and the method according to the invention, the consumption of treatment gas for functionalizing large containers 2 can be reduced drastically and uniform fluorination of the inner surface 1 of the container 2 can be achieved.

### List of References

- 1: Inner surface
- 2: Container
- 3: Gastight body
- 4: Intermediate space
- 5: Device
- 6: Closure apparatus
- 7: Feed apparatus
- 8: Structure
- 9: Bellows
- 10: Balloon
- 11: Line
- 12: Supply apparatus
- 13: Extraction apparatus
- 14: Treatment gas inlet
- 15: Flushing gas inlet
- 16: Pressurized gas inlet
- 17: Spacer

## Claims

1. Method for functionalizing an inner surface (1) of a container (2), comprising at least the following steps:
- introducing a gastight body (3) into the container (2), so that an intermediate space (4) is formed between the inner surface (1) and the gastight body (3),
- feeding a treatment gas into the intermediate space (4) .

2. Method according to Claim 1, wherein the treatment gas comprises at least fluorine or chlorine.

3. Method according to Claim 1 or 2, wherein, before feeding the treatment gas in, the size of the gastight body (3) is modified so that the intermediate space (4) has a predetermined volume.

4. Method according to Claim 3, wherein the size of the gastight body (3) is modified by supplying a pressurized gas.

5. Method according to one of the preceding claims, wherein the intermediate space (4) is flushed with a flushing gas.

6. Method according to one of the preceding claims, wherein a gas from the group consisting of:
- treatment gas and
- flushing gas
is fed through the gastight body (3) into the intermediate space (4).

7. Device (5) for functionalizing an inner surface (1) of a container (2), comprising:
- a closure apparatus (6) able to close the opening of the container (2),
- a gastight body (3) able to be introduced into the container, and
- a feed apparatus (7) for feeding a gas into the container (2),
wherein :
- the gastight body (3) is able to be introduced into the container (2) so that an intermediate space (4) is formed between the inner surface (1) of the container and the gastight body (3), and
- the feed apparatus (7) is adapted to feed a treatment gas into the intermediate space (4).

8. Device (5) according to Claim 7, wherein the gastight body (3) is applied, and can be introduced into the container (2), on the closure apparatus (6).

9. Device (5) according to Claim 7 or 8, wherein the gastight body (3) is an element from the following group:
- a rigid structure (8),
- a bellows (9),
- an elastic balloon (10).

10. Device (5) according to one of Claims 7 to 9, wherein the feed apparatus (7) comprises lines (11) for passing a gas through the closure apparatus (6) and through the gastight body (3).

11. Device (5) according to one of Claims 7 to 10, wherein a supply apparatus (12) for supplying pressurized gas into the gastight body (3) is applied on the closure apparatus (6).

## Patentansprüche

1. Verfahren zum Funktionalisieren einer Innenfläche (1) eines Behälters (2), das wenigstens die folgenden Schritte beinhaltet:
- Einführen eines gasdichten Körpers (3) in den Behälter (2), so dass ein Zwischenraum (4) zwischen der Innenfläche (1) und dem gasdichten Körper (3) entsteht,
- Speisen eines Behandlungsgases in den Zwischenraum (4).

2. Verfahren nach Anspruch 1, wobei das Behandlungsgas wenigstens Fluor oder Chlor beinhaltet.

3. Verfahren nach Anspruch 1 oder 2, wobei vor dem Einspeisen des Behandlungsgases die Größe des gasdichten Körpers (3) so verändert wird, dass der Zwischenraum (4) ein vorbestimmtes Volumen hat.

4. Verfahren nach Anspruch 3, wobei die Größe des gasdichten Körpers (3) durch Zuführen eines Druckgases verändert wird.

5. Verfahren nach einem der vorherigen Ansprüche, wobei der Zwischenraum (4) mit einem Spülgas gespült wird.

6. Verfahren nach einem der vorherigen Ansprüche, wobei ein Gas aus der Gruppe bestehend aus:
- Behandlungsgas und
- Spülgas
durch den gasdichten Körper (3) in den Zwischenraum (4) gespeist wird.

7. Vorrichtung (5) zum Funktionalisieren einer Innenfläche (1) eines Behälters (2), die Folgendes umfasst:
- eine Verschlussvorrichtung (6) zum Verschließen der Öffnung des Behälters (2),
- einen gasdichten Körper (3), der in den Behälter eingeführt werden kann, und
- eine Speisevorrichtung (7) zum Speisen eines Gases in den Behälter (2),
wobei:
- der gasdichte Körper (3) in den Behälter (2) eingeführt werden kann, so dass ein Zwischenraum (4) zwischen der Innenfläche (1) des Behälters und dem gasdichten Körper (3) entsteht, und
- die Speisevorrichtung (7) so ausgelegt ist, dass sie ein Behandlungsgas in den Zwischenraum (4) speist.

8. Vorrichtung (5) nach Anspruch 7, wobei der gasdichte Körper (3) auf die Verschlussvorrichtung (6) angewandt und in den Behälter (2) eingeführt werden kann.

9. Vorrichtung (5) nach Anspruch 7 oder 8, wobei der gasdichte Körper (3) ein Element aus der folgenden Gruppe ist:
- eine starre Struktur (8),
- ein Balg (9),
- ein elastischer Ballon (10).

10. Vorrichtung (5) nach einem der Ansprüche 7 bis 9, wobei die Speisevorrichtung (7) Leitungen (11) zum Leiten eines Gases durch die Verschlussvorrichtung (6) und durch den gasdichten Körper (3) umfasst.

11. Vorrichtung (5) nach einem der Ansprüche 7 bis 10, wobei eine Zufuhrvorrichtung (12) zum Zuführen von Druckgas in den gasdichten Körper (3) auf die Verschlussvorrichtung (6) angewandt wird.

## Revendications

1. Procédé de fonctionnalisation d'une surface interne (1) d'un récipient (2), comprenant au moins les étapes suivantes :
- introduire un corps (3) étanche aux gaz dans le récipient (2), de sorte qu'un espace intermédiaire (4) est formé entre la surface interne (1) et le corps (3) étanche aux gaz,
- alimenter en gaz de traitement l'espace intermédiaire (4).

2. Procédé selon la revendication 1, dans lequel le gaz de traitement comprend au moins du fluor ou du chlore.

3. Procédé selon la revendication 1 ou 2, dans lequel, avant l'alimentation en gaz de traitement, la taille du corps (3) étanche aux gaz est modifiée de sorte que l'espace intermédiaire (4) a un volume prédéterminé.

4. Procédé selon la revendication 3, dans lequel la taille du corps (3) étanche aux gaz est modifiée par l'approvisionnement d'un gaz sous pression.

5. Procédé selon l'une des revendications précédentes, dans lequel l'espace intermédiaire (4) est vidé avec un gaz d'évacuation.

6. Procédé selon l'une des revendications précédentes, dans lequel un gaz du groupe constitué par :
- un gaz de traitement et
- un gaz d'évacuation
alimente l'espace intermédiaire (4) à travers le corps (3) étanche aux gaz.

7. Dispositif (5) de fonctionnalisation d'une surface interne (1) d'un récipient (2), comprenant :
- un appareil de fermeture (6) apte à fermer l'ouverture du récipient (2),
- un corps (3) étanche aux gaz apte à être introduit dans le récipient, et
- un appareil d'alimentation (7) pour alimenter en gaz le récipient (2), dans lequel :
- le corps (3) étanche aux gaz est apte à être introduit dan le récipient (2) de sorte qu'un espace intermédiaire (4) est formé entre la surface interne (1) du récipient et le corps (3) étanche aux gaz, et
- l'appareil d'alimentation (7) est adapté pour alimenter en gaz de traitement l'espace intermédiaire (4).

8. Dispositif (5) selon la revendication 7, dans lequel le corps (3) étanche aux gaz est installé, et peut être introduit dans le récipient (2), sur l'appareil de fermeture (6).

9. Dispositif (5) selon la revendication 7 ou 8, dans lequel le corps (3) étanche aux gaz est un élément du groupe suivant :
- une structure rigide (8),
- un soufflet (9),
- un ballon élastique (10).

10. Dispositif (5) selon l'une des revendications 7 à 9, dans lequel l'appareil d'alimentation (7) comprend des conduites (11) pour faire passer un gaz à travers l'appareil de fermeture (6) et à travers le corps (3) étanche aux gaz.

11. Dispositif (5) selon l'une des revendications 7 à 10, dans lequel un appareil d'approvisionnement (12) pour approvisionner en gaz sous pression le corps (3) étanche aux gaz est installé sur l'appareil de fermeture (6).
